# EUROPÄISCHE PATENTSCHRIFT

(11) **EP 3 304 655 B1**
(45) Veröffentlichungstag und Bekanntmachung des Hinweises auf die Patenterteilung: **23.09.2020**
(21) Anmeldenummer: 16727142.8
(22) Anmeldetag: 19.05.2016
(51) Int. Cl.: H01R 13/639, B60L 53/16, H01R 13/627

(54) **VERRIEGELUNGSSYSTEM FÜR EINEN LADESTECKER**
LOCKING SYSTEM FOR A CHARGING PLUG
SYSTÈME DE VERROUILLAGE POUR UN CONNECTEUR DE CHARGE

(30) Priorität: 03.06.2015 DE 102015108831
(43) Veröffentlichungstag der Anmeldung: 11.04.2018
(73) Patentinhaber: Huf Hülsbeck & Fürst GmbH & Co. KG, 42551 Velbert (DE)
(72) Erfinder: GORENZWEIG, Igor, 42109 Wuppertal (DE)
(74) Vertreter: Zenz Patentanwälte Partnerschaft mbB
(86) Internationale Anmeldenummer: PCT/EP2016/061246
(87) Internationale Veröffentlichungsnummer: WO 2016/193011

(56) Entgegenhaltungen:
- EP-A2- 2 602 879
- WO-A1-2011/120719
- WO-A1-2014/063140
- DE-A1-102009 043 845
- DE-A1-102011 050 783
- DE-A1-102012 013 998
- DE-U1-202013 009 554
- US-A1- 2013 089 999

## Beschreibung

Die Erfindung richtet sich auf ein Verriegelungssystem für einen Ladestecker eines elektrisch betriebenen Kraftfahrzeugs, aufweisend einen Verriegelungsantrieb, eine Ladestecker-Aufnahme, in welche der Ladestecker zum Laden des Kraftfahrzeugs einsteckbar ist, ein an dem Außenrand der Ladestecker-Aufnahme montiertes Adapterelement, welches zwischen der Ladestecker-Aufnahme und dem Verriegelungsantrieb angeordnet ist, und ein Sperrelement, welches in dem Adapterelement untergebracht ist und mittels des Verriegelungsantriebs zwischen einer Entriegelungsposition, in welcher das Sperrelement außerhalb eines zur Aufnahme des Ladesteckers dienenden Aufnahmeraumes der Ladestecker-Aufnahme angeordnet ist, und einer Verriegelungsposition, in welcher das Sperrelement in den Aufnahmeraum der Ladestecker-Aufnahme hineinragt und mit dem Ladestecker in Eingriff bringbar ist, bewegbar ist, wobei zwischen dem Adapterelement und dem Verriegelungsantrieb ein erstes Übertragungselement angeordnet ist, welches eine von dem Verriegelungsantrieb erzeugte Bewegungskraft auf das Sperrelement zur Bewegung des Sperrelements zwischen der Entriegelungsposition und der Verriegelungsposition überträgt und welches eine beabstandete Anordnung von Verriegelungsantrieb und Ladestecker-Aufnahme ermöglicht.

Ein Verriegelungssystem der Eingangs bezeichneten Art ist zum Beispiel aus der DE 20 2013 009554 U1, der WO 2011/120719, der DE 10 2009 043845 A1, der WO 2014/063140 A1 und der US 2013/089999A1 bekannt.

Ferner ist ein Verriegelungssystem aus der DE 10 2011 056 130 A1 bekannt und dient zur Verriegelung eines Ladesteckers, welcher in eine Ladesteckdose bzw. Ladestecker-Aufnahme einsteckbar ist, die am Kraftfahrzeug und/oder an einer Ladesäule angeordnet ist. Dieses bekannte Verriegelungssystem umfasst einen Verriegelungsantrieb und die Ladestecker-Aufnahme, wobei der Verriegelungsantrieb über ein Adapterelement mit der Ladestecker-Aufnahme fest verbunden ist. Genauer gesagt ist der Verriegelungsantrieb mit Hilfe des Adapterelements an der Ladestecker-Aufnahme befestigt. Ein Sperrelement ist in dem Verriegelungsantrieb integriert. Dabei bewegt der Verriegelungsantrieb das Sperrelement zwischen einer Verriegelungsposition, bei welcher das Sperrelement durch das Adapterelement in die Ladestecker-Aufnahme hinein bewegt ist und mit einem Ladestecker in Eingriff bringbar ist, und einer Entriegelungsposition, in welcher das Sperrelement aus der Ladestecker-Aufnahme zurückgezogen angeordnet ist, bewegbar ist. Von Nachteil bei diesem bekannten Verriegelungssystem ist es, dass das System aufgrund des Verriegelungsantriebs, der über das Adapterelement direkt an der Ladestecker-Aufnahme montiert ist, sehr viel Bauraum in Anspruch nimmt, was insbesondere dann von Nachteil ist, wenn die Ladestecker-Aufnahme an einem Kraftfahrzeug ausgebildet ist und ein Ladestecker beim Aufladen mit Hilfe des Sperrelements in der Ladestecker-Aufnahme fixiert werden soll.

Der Erfindung liegt die Aufgabe zugrunde eine Lösung zu schaffen, die auf konstruktiv einfache Weise und kostengünstig ein Verriegelungssystem bereitstellt, welches eine Bauraumersparnis bewirkt und darüber hinaus auch bei engen Bauraumverhältnissen eingesetzt werden kann.

Bei einem Verriegelungssystem der Eingangs bezeichneten Art wird die Aufgabe erfindungsgemäß dadurch gelöst, dass das Adapterelement als wenigstens zweiteiliges Bauteil ausgebildet ist, welches ein einen Bewegungsraum für das Sperrelement aufweisendes Basiselement und ein über eine Bajonett-Verbindung an dem Basiselement befestigbares Deckelelement umfasst, wobei das Deckelelement einen Kompressions-Expansions-Raum aufweist und das an dem Basiselement befestigte Deckelelement und das Basiselement gemeinsam über eine Schraubverbindung an der Ladestecker-Aufnahme befestigt sind, wobei in dem Adapterelement innerhalb des Kompressions-Expansions-Raums ein elastisches Federelement vorgesehen ist, welches eine das Sperrelement in die Verriegelungsposition drängende Kraft auf das Sperrelement ausübt. Im Sinne der Erfindung ist unter einer beabstandeten Anordnung zu verstehen, dass der Verriegelungsantrieb und die Ladestecker-Aufnahme in einem vorgegebenen Abstand zueinander angeordnet sind, wodurch es möglich ist, dass der Verriegelungsantrieb einem anderen Bauraum als die Ladestecker-Aufnahme zugeordnet ist. Dabei ist der Ladestecker nicht Bestandteil des erfindungsgemäßen Systems.

Vorteilhafte und zweckmäßige Ausgestaltungen und Weiterbildungen der Erfindung ergeben sich aus den Unteransprüchen.

Durch die Erfindung wird ein Verriegelungssystem zur Verfügung gestellt, das sich durch eine funktionsgerechte Konstruktion auszeichnet und einen einfachen und kostengünstigen Aufbau aufweist. Dadurch, dass zwischen dem Adapterelement und dem Verriegelungsantrieb ein erstes Übertragungselement angeordnet ist, ist es möglich, dass der Verriegelungsantrieb entfernt von der Ladestecker-Aufnahme angeordnet werden kann. Dadurch kann die Ladestecker-Aufnahme auch an einer Position angeordnet werden, die lediglich einen Bauraum für die Ladestecker-Aufnahme und nicht für den Verriegelungsantrieb aufweist. Der Verriegelungsantrieb kann hingegen an einer Position angebracht sein, die einen ausreichenden Einbauraum aufweist, der aber entfernt von bzw. in einem vorgegebenen Abstand zu der Ladestecker-Aufnahme angeordnet ist. Über das erste Übertragungselement ist aber das Sperrelement in dem Adapterelement, welches wiederum auf der Ladestecker-Aufnahme montiert ist, bewegungsgekoppelt. Im Gegensatz zum Stand der Technik ist das Sperrelement nicht mehr innerhalb des Verriegelungsantriebs sondern innerhalb des Adapterelements untergebracht. Auf diese Weise ist erfindungsgemäß ein sehr flexibles Verriegelungssystem bereitgestellt. Durch die beabstandete Anordnung des Verriegelungsantriebs von der Ladestecker-Aufnahme mit dem daran montierten Adapterelement kann der an der Ladestecker-Aufnahme geschaffene Bauraum dazu genutzt werden, einen im Gegensatz zu den bekannten Systemen größeren Verriegelungsweg für das Sperrelement vorzusehen, damit eine noch sicherere Verriegelung mit dem Ladestecker möglich ist. Denn durch den gewonnenen Bauraum kann ein variabler und größerer Hub des Sperrelements, also der Bewegungsweg des Sperrelements zwischen der Entriegelungsposition und der Verriegelungsposition, realisiert werden. Ferner erlaubt es die Zweiteiligkeit, das Basiselement und das Deckelelement unabhängig voneinander unterschiedlich auszubilden und somit an verschiedene Aspekte anzupassen, wie beispielsweise einer unterschiedlichen Ausgestaltung des Kompressions-Expansions-Raumes unter Berücksichtigung des elastischen Federelements, was für eine konstruktive Flexibilität sorgt.

Bei dem erfindungsgemäßen Verriegelungssystems ist es von Vorteil, wenn in dem Adapterelement ein elastisches Federelement vorgesehen ist, welches eine das Sperrelement in die Verriegelungsposition drängende Kraft auf das Sperrelement ausübt. Auf diese Weise muss der Verriegelungsantrieb das Sperrelement in nur eine Richtung, nämlich in Richtung der Entriegelungsposition, bewegen. Der Verriegelungsantrieb muss folglich nur dann in Betrieb sein, wenn das Sperrelement in die Entriegelungsposition bewegt werden muss, so dass auf diese Weise für das System auch noch Energie eingespart werden kann.

Konstruktiv besonders günstig ist es in Ausgestaltung des erfindungsgemäßen Verriegelungssystems, wenn sich das elastische Federelement zwischen einer Anschlagfläche des Adapterelements und einer Abstützfläche des Sperrelements erstreckt und sich jeweils daran abstützt.

Die Erfindung sieht in weiterer Ausgestaltung vor, dass die von dem Verriegelungsantrieb erzeugte Bewegungskraft eine entgegen der Kraft des elastischen Federelements wirkende Kraft ist, um das Sperrelement mittels des ersten Übertragungselements aus der Verriegelungsposition in die Entriegelungsposition zu bewegen. Mit anderen Worten muss der Verriegelungsantrieb nur dann eine Kraft aufbringen, wenn das Sperrelement in die Entriegelungsposition bewegt werden muss.

Eine kostengünstige Lösung zur konstruktiven Realisierung des ersten Übertragungselements besteht in Ausgestaltung der Erfindung darin, dass das erste Übertragungselement ein Bowdenzug ist, welcher den Verriegelungsantrieb über das Adapterelement mit dem Sperrelement bewegungskoppelt.

Mit Hilfe einer mechanischen Serviceentriegelung, die auch als Notentriegelung verwendet werden kann, kann das Sperrelement auch ohne Inbetriebnahme des Verriegelungsantriebs aus seiner Verriegelungsposition in die Entriegelungsposition bewegt werden. Zu diesem Zweck sieht die Erfindung in weiterer Ausgestaltung vor, dass ein zweites Übertragungselement mit dem Sperrelement verbunden ist, wobei das zweite Übertragungselement manuell von einer Person betätigbar ist, um das Sperrelement in die Entriegelungsposition zu bewegen.

Damit das Sperrelement auch sicher in der Entriegelungsposition, insbesondere gegen die Kraft des elastischen Federelements, gehalten werden kann, sieht die Erfindung in weiterer Ausgestaltung vor, dass der Verriegelungsantrieb ein selbsthemmendes Schneckengetriebe umfasst. Bei dem Schneckengetriebe handelt es sich um eine schraubenförmige Schnecke, die bei Drehbewegung ein in dieses eingreifende Zahnrad dreht. Die selbsthemmende Wirkung wird dadurch erzielt, weil sich das Schneckengetriebe nur über die Antriebswelle und nicht über die Abtriebswelle antreiben lässt.

In einer weiteren Ausgestaltung ist vorgesehen, dass bei dem erfindungsgemäßen Verriegelungssystem die Bajonett-Verbindung von zwei vom Zentrum des Basiselements aus betrachtet diametral zueinander angeordneten Verriegelungsarmen und dazu korrespondierenden Halteausnehmungen in dem Deckelelement, in welche die Verriegelungsarme eingreifen, gebildet ist. Mit Hilfe der Bajonett-Verbindung ist das zweiteilig ausgebildete Adapterelement schnell und ohne Hilfe eines Werkzeugs demontierbar, so dass ohne viel Aufwand entweder das Basiselement oder das Deckelelement getauscht werden können, wobei natürlich nach der Demontage auch Bauteile innerhalb des Adapterelements getauscht und ersetzt werden können, wie zum Beispiel das Sperrelement oder das Federelement.

Schließlich sieht die Erfindung zur Erhöhung der Anwendungsflexibilität vor, dass auf der Außenseite des Adapterelements ein schlauchförmiges Führungselement angeformt ist, durch welches sich ein Abschnitt des ersten Übertragungselements erstreckt und welches das erste Übertragungselement abschnittsweise führt. Mit Hilfe des Führungselements kann die Kraftrichtung des ersten Übertragungselements gelenkt und umgeleitet werden, so dass die Anordnung des Verriegelungsantriebs und der Ladestecker-Aufnahme frei wählbar ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein erfindungsgemäßes Verriegelungssystem in perspektivischer Ansicht,
Figur 2 eine weitere perspektivische Darstellung des Verriegelungssystems,
Figur 3 eine Einzelteildarstellung des erfindungsgemäßen Verriegelungssystems,
Figur 4 in seitlicher Schnittansicht ein Sperrelement des Verriegelungssystems in seiner Entriegelungsposition,
Figur 5 in seitlicher Schnittansicht das Sperrelement des Verriegelungssystems in seiner Verriegelungsposition,
Figur 6 eine Darstellung von oben auf einen geöffneten Verriegelungsantrieb des erfindungsgemäßen Verriegelungssystems,
Figur 7 eine Darstellung von unten auf den geöffneten Verriegelungsantrieb des erfindungsgemäßen Verriegelungssystems,
Figur 8 eine schematische und perspektivische Darstellung einer Bowdenzugführung, die an dem Verriegelungsantrieb vorgesehen ist,
Figur 9 ein Deckelelement eines Adapterelements des erfindungsgemäßen Verriegelungssystems in perspektivischer Darstellung,
Figur 10 ein anderes Deckelelement des Adapterelements des erfindungsgemäßen Verriegelungssystems in perspektivischer Darstellung,
Figur 11 das Deckelelement aus Figur 10 und ein Basiselement, die zusammen das Adapterelement ausbilden, in perspektivischer Einzelteildarstellung,
Figur 12 das Deckelelement und das Basiselement vor deren Montage in perspektivischer Ansicht,
Figur 13 das Deckelelement und das Basiselement im montierten Zustand in perspektivischer Ansicht und
Figur 14 ein Sperrelement des Verriegelungssystems mit mechanischer Serviceverriegelung in perspektivischer Ansicht, wobei ein erstes und ein zweites Übertragungselement an dem Sperrelement zu dessen Bewegung angebracht sind.

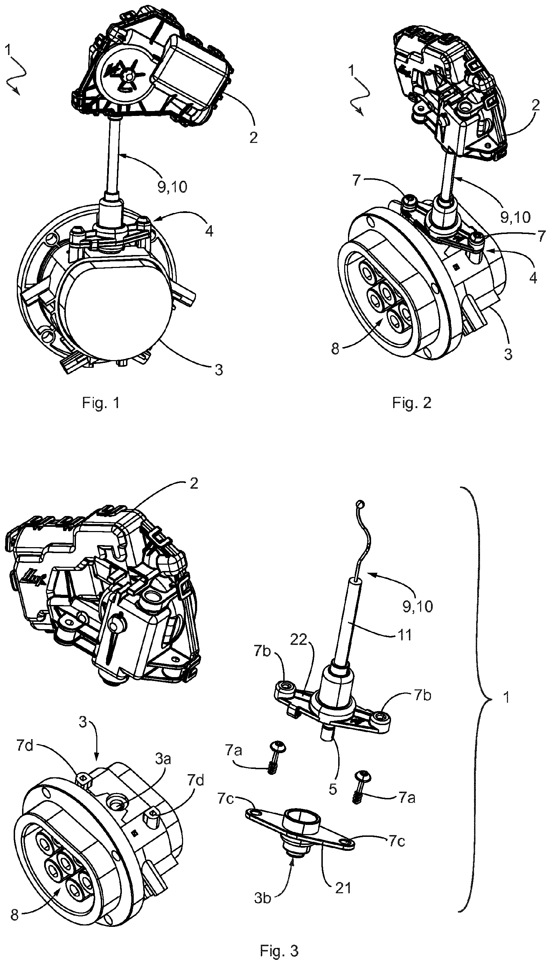

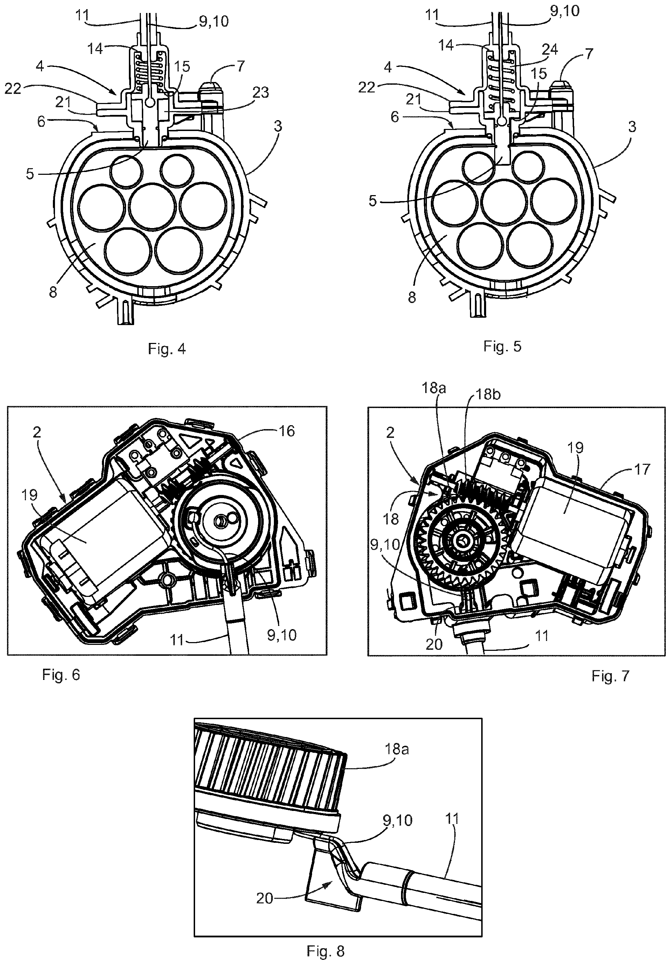

In den Figuren 1 bis 3 ist ein erfindungsgemäßes Verriegelungssystem 1 dargestellt, welches zur Verriegelung eines nicht näher dargestellten Ladesteckers dient, wobei der Ladestecker zum Aufladen eines Energiespeichers eines elektrisch betriebenen Kraftfahrzeugs verwendet wird. Die Figuren 1 und 2 zeigen verschiedene, perspektivische Darstellungen des Verriegelungssystems 1, wohingegen die Figur 3 eine Einzelteildarstellung des Verriegelungssystems 1 in perspektivischer Ansicht zeigt. Das Verriegelungssystem 1 umfasst einen Verriegelungsantrieb 2, eine Ladesteckdose bzw. eine Ladestecker-Aufnahme 3, in welche der nicht näher dargestellte Ladestecker zum Laden des Kraftfahrzeugs einsteckbar ist, ein Adapterelement 4 und ein Sperrelement 5. Das Adapterelement 4 ist an dem Außenrand 6 der als Ladesteckdose ausgebildeten Ladestecker-Aufnahme 3 montiert, wozu zum Beispiel eine wie in dem gezeigten Ausführungsbeispiel verwendete Schraubverbindung 7 dient. Die Schraubverbindung 7 wird von Schrauben 7a, entsprechenden Durchgangsbohrungen 7b und 7c, die im Adapterelement 4 ausgeformt sind, und Bohrungen 7d in dem Außenrand 6 der Ladestecker-Aufnahme 3 gebildet (siehe zum Beispiel Figur 3), wobei zur Montage des Adapterelements 4 an der Ladestecker-Aufnahme 3 die Schrauben 7a durch die Durchgangsbohrungen 7b, 7c hindurch gesteckt und in die Bohrungen 7d eingeschraubt sind. Das Adapterelement 4 ist zwischen der Ladestecker-Aufnahme 3 und dem Verriegelungsantrieb 2 angeordnet. Das Sperrelement 5 ist innerhalb des Adapterelements 4 untergebracht (siehe zum Beispiel Figuren 4 und 5). Mit Hilfe des Verriegelungsantriebs 2 ist das Sperrelement 5 zwischen einer Entriegelungsposition (siehe Figur 4) und einer Verriegelungsposition (siehe Figur 5) bewegbar. Dabei ist das Sperrelement 5 in Entriegelungsposition außerhalb eines zur Aufnahme des Ladesteckers dienenden Aufnahmeraumes 8 der Ladestecker-Aufnahme 3 angeordnet, wohingegen in der Verriegelungsposition das Sperrelement 5 in den Aufnahmeraum 8 der Ladestecker-Aufnahme 3 hineinragt, um mit einem in dem Aufnahmeraum 8 eingesteckten Ladestecker in Eingriff bringbar zu sein. Um in den Aufnahmeraum 8 hineinzuragen, weist die Ladestecker-Aufnahme 3 ein radial verlaufendes Durchgangsloch 3a auf, durch das hindurch das Sperrelement 5 in den Aufnahmeraum 8 bewegbar ist, wobei das Adapterelement 4 einen Durchgang aufweist, durch den das Sperrelement 5 aus dem Adapterelement 4 durch das Durchgangsloch 3a in den Aufnahmeraum 8 eintauchen kann, um einen Ladestecker in dem Aufnahmeraum 8 zu sichern. Die Ladestecker-Aufnahme 3, die an einem elektrisch betriebenen Kraftfahrzeug oder an einer Ladesäule angeordnet ist und auch als Ladesteckdose bezeichnet werden darf, ist erfindungsgemäß von dem Verriegelungsantrieb 2 beabstandet angeordnet, wobei ein erstes Übertragungselement 9 das Sperrelement 5 mit dem Verriegelungsantrieb 2 wirkverbindet. Das erste Übertragungselement 9 überträgt eine von dem Verriegelungsantrieb 2 erzeugte Bewegungskraft auf das Sperrelement 5, um das Sperrelement 5 zwischen der Entriegelungsposition und der Verriegelungsposition zu bewegen. Das erste Übertragungselement 9 ist ein Bowdenzug 10, welcher sich innerhalb eines Schutzschlauches erstreckt und den Verriegelungsantrieb 2 mit dem Sperrelement 5 bewegungskoppelt und wirkverbindet. Das erste Übertragungselement 9 in Form des Bowdenzugs 10 ermöglicht eine beabstandete Anordnung von Verriegelungsantrieb 2 und Ladestecker-Aufnahme 3, so dass zwar mit dem erfindungsgemäßen Verriegelungssystem 1 nicht primär Bauraum eingespart werden kann, jedoch infolge der Möglichkeit der beabstandeten Anordnung eine getrennte bzw. einen vorgegebenen Abstand aufweisende Anordnung von Verriegelungsantrieb 2 und Ladestecker-Aufnahme 3 möglich ist, so dass wenigstens für den Verriegelungsantrieb 2 eine Anordnung an einer Position gewählt werden kann, die nicht kritisch in Bezug auf den Bauraum ist. Das erste Übertragungselement 9 bzw. der Bowdenzug 10 ist in dem dargestellten Ausführungsbeispiel von einer Umhüllung 11 umgeben, die dem Schutz des Bowdenzugs 10 dient. Als Alternative zu einem Bowdenzug 10 kann auch ein Memorydraht als erstes Übertragungselement 9 verwendet werden. Der Memorydraht ist dann ebenfalls mit dem Sperrelement 5 bewegungsgekoppelt, indem der Memorydraht bestromt wird, wodurch er seine Länge ändert. Nach Entfall der Bestromung nimmt der Memorydraht dann wieder seine Ausgangslänge ein.

Die Figuren 4 und 5 zeigen nähere Details des Adapterelements 4 des erfindungsgemäßen Verriegelungssystems 1, wobei Figur 4 das Sperrelement 5 in seiner Entriegelungsposition zeigt, in welcher das Sperrelement 5 zurückgezogen in dem Adapterelement 5 angeordnet ist. In Figur 5 ragt das Sperrelement 5 hingegen in den Aufnahmeraum 8 der Ladestecker-Aufnahme 3 hinein und kann mit einem Ladestecker in Eingriff stehen, um diesen in dem Aufnahmeraum 8 zu sichern. Wie den Figuren 3 und 4 ferner zu entnehmen ist, ist innerhalb des Adapterelements 4 ein elastisches Federelement 12 angeordnet. Das Federelement 12 ist als Druckfeder ausgebildet, wobei sich die Enden des Federelements 12 einerseits an einer Anschlagfläche 14 des Adapterelements 4 und andererseits an einer Abstützfläche 15 des Sperrelements 5 abstützen. Das als Druckfeder ausgebildete Federelement 12 übt auf das Sperrelement 5 eine Kraft aus, durch die das Sperrelement 5 in seine Verriegelungsposition gedrängt wird. Folglich erstreckt sich das elastische Federelement 12 zwischen der Anschlagfläche 14 des Adapterelements 4 und der Abstützfläche 15 des Sperrelements 5 und stützt sich jeweils an den Flächen 14 und 15 ab. Das Sperrelement 5 ist somit in seine Verriegelungsposition vorgespannt. Um das Sperrelement 5 in die Entriegelungsposition zu bewegen, muss der Verriegelungsantrieb 2 an dem ersten Übertragungselement 9 ziehen, um das Sperrelement 5 aus dem Aufnahmeraum 8 der Ladestecker-Aufnahme 3 herauszubewegen. Dabei muss der Verriegelungsantrieb 2 nicht nur eine Bewegungskraft, die der Kraft des elastischen Federelements 12 entgegenwirkt, sondern auch größer ist als die Kraft des elastischen Federelements 12 erzeugen, um das Sperrelement 5 mittels des ersten Übertragungselements 9 aus der Verriegelungsposition in die Entriegelungsposition zu bewegen.

In den Figuren 6, 7 und 8 sind weitere Details des erfindungsgemäßen Verriegelungssystems 1 und insbesondere des Verriegelungsantriebs 2 dargestellt. Der Verriegelungsantrieb 2 umfasst ein zweiteiliges Gehäuse mit einer Oberschale 16 und einer Unterschale 17, wobei die Oberschale 16 und die Unterschale 17 mittels einer Clip-Verbindung dichtend zum Schutz gegen Staub und Feuchtigkeit miteinander verbunden sind. Innerhalb des zweiteiligen Gehäuses des Verriegelungsantriebs 2 ist ein selbsthemmendes Schneckengetriebe 18 angeordnet. Mit Hilfe des selbsthemmenden Schneckengetriebes 18 kann das Sperrelement 5 sicher in der Entriegelungsposition gegen die Kraft des elastischen Federelements 12 gehalten werden. Das selbsthemmende Schneckengetriebe 18 umfasst eine schraubenförmige Schnecke 18a, die bei Drehbewegung ein in dieses eingreifende Zahnrad 18b dreht, an welchem ein Längsende des ersten Übertragungselements 9 befestigt ist. Die selbsthemmende Wirkung wird dadurch erzielt, weil sich das Schneckengetriebe 18 nur über eine Antriebswelle und nicht über die Schnecke 18a antreiben lässt. Die Antriebswelle wird von einem Elektromotor 19 angetrieben, der ebenfalls innerhalb des Gehäuses des Verriegelungsantriebs 2 angeordnet ist. Damit sich der Bowdenzug 10 als das erste Übertragungselement 9 auch richtig an dem Zahnrad 18b des Verriegelungsantriebs 2 auf- und abrollen kann, ohne dass eine Funktionsstörung zu befürchten ist, ist am Verriegelungsantrieb 2 eine Bowdenzugführung 20 vorgesehen, die im Bereich der Durchtrittsöffnung des Gehäuses des Verriegelungsantriebs 2 angeordnet ist und den Bowdenzug 10 zu dem Zahnrad 18b führt.

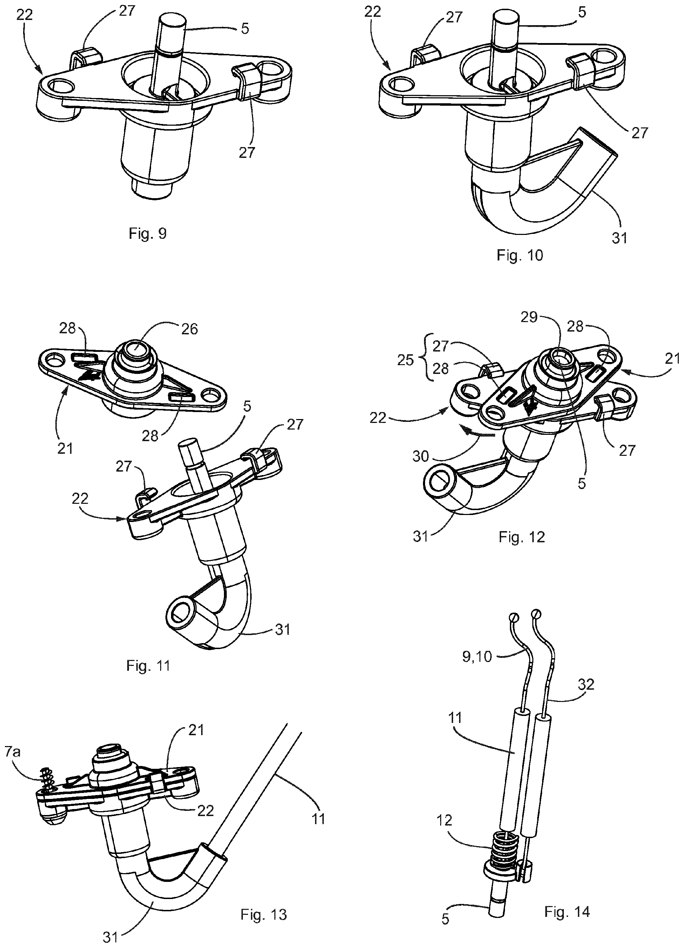

Wie bereits in der Einzelteildarstellung der Figur 3 angedeutet und mit Bezug auf die Figuren 9 bis 13 ersichtlich, ist das Adapterelement 4 bei der dargestellten Ausführungsform als ein Bauteil mit einem zweiteiligen Gehäuse ausgeführt und umfasst ein Basiselement 21 und ein Deckelelement 22, die zur Bildung des Gehäuses des Adapterelements 4 miteinander verbunden werden. Das Basiselement 21 des Adapterelements 4 weist einen Bewegungsraum 23 (siehe Figur 4) auf, in welchem das Sperrelement 5 positioniert ist und der eine Bewegung des Sperrelements 5 in radialer Richtung zur Ladestecker-Aufnahme 3 zulässt. In dem Bewegungsraum 23 kann sich das Sperrelement 5 zwischen seiner Entriegelungsposition (siehe Figur 4) und seiner Verriegelungsposition (siehe Figur 5) bewegen. Das Deckelelement 22 hingegen weist einen Kompressions-Expansions-Raum 24 (siehe Figur 5) auf. Innerhalb des Kompressions-Expansions-Raums 24 ist das elastische Federelement 12 angeordnet und kann sich ausdehnen, um das Sperrelement 5 mit Hilfe der Federkraft in die Verriegelungsposition zu drängen. Wie insbesondere aus Figur 5 ersichtlich ist, dient ein Abschnitt des Bewegungsraumes 23 gleichzeitig als Kompressions-Expansions-Raum 24, wenn sich das Sperrelement 5 in die Verriegelungsposition bewegt. Aus den Figuren 9 bis 13 ist ferner eine Bajonett-Verbindung 25 ersichtlich, durch die das Basiselement 21 an dem Deckelelement 22 befestigbar ist. Die Bajonett-Verbindung 25 ist von zwei vom Zentrum 26 des Basiselements 21 aus betrachtet diametral zueinander angeordneten Verriegelungsarmen 27 und dazu korrespondierenden Halteausnehmungen 28 in dem Deckelelement 22, in welche die Verriegelungsarme 27 eingreifen, gebildet. Das zweiteilige Gehäuse des Adapterelements 4 wird in der Reihenfolge der Figuren 11, 12 und 13 zusammengebaut, indem das Basiselement 21 auf das Deckelelement 22 aufgesetzt wird, wodurch das Sperrelement 5 innerhalb einer Durchgangsöffnung 29 des Basiselements 21 angeordnet wird. Anschließend wird das Basiselement 21 dann relativ zu dem Deckelelement 22 in Richtung des Pfeils 30 in Figur 12 gedreht, wodurch die Verriegelungsarme 27 in die Halteausnehmungen 28 eingreifen und das Basiselement 21 an dem Deckelelement 22 fixieren, wie es in Figur 13 gezeigt ist. Das so zusammengebaute Adapterelement 4 kann nun an der Ladestecker-Aufnahme 3 befestigt werden. Wie vorstehend bereits beschrieben, sind das an dem Basiselement 21 befestigte Deckelelement 22 und das Basiselement 21 gemeinsam über die Schraubverbindung 7 an der Ladestecker-Aufnahme 3 befestigt.

Das in Figur 9 gezeigte Deckelelement 22 entspricht einer Basisausführung, welche um ein Führungselement 31 erweiterbar ist, wie aus den Figuren 10 bis 13 ersichtlich ist. Das Führungselement 31 kann optional der in Figur 9 gezeigten Basisausführung hinzugefügt werden. Es kann aber auch an der Außenseite des Deckelelements 22 des Adapterelements 4 angeformt und dadurch einstückig mit dem Deckelelement 22 ausgeführt sein. Durch das schlauchförmige Führungselement 31 kann der Bowdenzug 10 abgewinkelt geführt werden, wodurch die Flexibilität der Anordnung des Verriegelungsantriebs 2 weiter erhöht wird. Denn mit Hilfe des Führungselements 31 muss die Richtung der Kraft, die von dem Verriegelungsantrieb 2 erzeugt wird, nicht mit der Richtung übereinstimmen, in die das Sperrelement 5 bewegt werden muss, um in die Entriegelungsposition überführt zu werden. Das schlauchförmige Führungselement 31 führt somit einen Abschnitt des ersten Übertragungselements 9.

Figur 14 zeigt schließlich ein zweites Übertragungselement 32, welches mit dem Sperrelement 5 verbunden ist. Das zweite Übertragungselement 32 ist manuell von einer Person betätigbar, um das Sperrelement 5 in die Entriegelungsposition zu bewegen. Somit kann das Sperrelement 5 auch mechanisch betätigt werden, was beispielsweise bei einer Notbetätigung der Fall sein könnte, wenn der Elektromotor 19 ausgefallen sein sollte.

Die vorstehend beschriebene Erfindung ist selbstverständlich nicht auf die beschriebene und dargestellte Ausführungsform beschränkt.

## Patentansprüche

1. Verriegelungssystem (1) für einen Ladestecker eines elektrisch betriebenen Kraftfahrzeugs, aufweisend
einen Verriegelungsantrieb (2),
eine Ladestecker-Aufnahme (3), in welche der Ladestecker zum Laden des Kraftfahrzeugs einsteckbar ist,
ein an dem Außenrand (6) der Ladestecker-Aufnahme (3) montiertes Adapterelement (4), welches zwischen der Ladestecker-Aufnahme (3) und dem Verriegelungsantrieb (2) angeordnet ist, und
ein Sperrelement (5), welches in dem Adapterelement (4) untergebracht ist und mittels des Verriegelungsantriebs (2) zwischen einer Entriegelungsposition, in welcher das Sperrelement (5) außerhalb eines zur Aufnahme des Ladesteckers dienenden Aufnahmeraumes (8) der Ladestecker-Aufnahme (3) angeordnet ist, und einer Verriegelungsposition, in welcher das Sperrelement (5) in den Aufnahmeraum (8) der Ladestecker-Aufnahme (3) hineinragt und mit dem Ladestecker in Eingriff bringbar ist, bewegbar ist,
wobei zwischen dem Adapterelement (4) und dem Verriegelungsantrieb (2) ein erstes Übertragungselement (9) angeordnet ist, welches eine von dem Verriegelungsantrieb (2) erzeugte Bewegungskraft auf das Sperrelement (5) zur Bewegung des Sperrelements (5) zwischen der Entriegelungsposition und der Verriegelungsposition überträgt und welches eine beabstandete Anordnung von Verriegelungsantrieb (2) und Ladestecker-Aufnahme (3) ermöglicht, 11 wobei das Adapterelement (4) als wenigstens zweiteiliges Bauteil ausgebildet ist,
**dadurch gekennzeichnet, dass** das Adapterelement (4) ein einen Bewegungsraum (23) für das Sperrelement (5) aufweisendes Basiselement (21) und ein über eine Bajonett-Verbindung (25) an dem Basiselement (21) befestigbares Deckelelement (22) umfasst, wobei das Deckelelement (22) einen Kompressions-Expansions-Raum (24) aufweist und das an dem Basiselement (21) befestigte Deckelelement (22) und das Basiselement (21) gemeinsam über eine Schraubverbindung (7) an der Ladestecker-Aufnahme (3) befestigt sind, wobei in dem Adapterelement (4) innerhalb des Kompressions-Expansions-Raums (24) ein elastisches Federelement (12) vorgesehen ist, welches eine das Sperrelement (5) in die Verriegelungsposition drängende Kraft auf das Sperrelement (5) ausübt.

2. Verriegelungssystem (1) nach Anspruch 1, **dadurch gekennzeichnet, dass** sich das elastische Federelement (12) zwischen einer Anschlagfläche (14) des Adapterelements (4) und einer Abstützfläche (15) des Sperrelements (5) erstreckt und sich jeweils daran abstützt.

3. Verriegelungssystem (1) nach Anspruch 1 oder 2, **dadurch gekennzeichnet, dass** die von dem Verriegelungsantrieb (2) erzeugte Bewegungskraft eine entgegen der Kraft des elastischen Federelements (12) wirkende Kraft ist, um das Sperrelement (5) mittels des ersten Übertragungselements (9) aus der Verriegelungsposition in die Entriegelungsposition zu bewegen.

4. Verriegelungssystem (1) nach einem der vorhergehenden Ansprüche, **dadurch gekennzeichnet, dass** das erste Übertragungselement (9) ein Bowdenzug (10) ist, welcher den Verriegelungsantrieb (2) über das Adapterelement (4) mit dem Sperrelement (5) bewegungskoppelt.

5. Verriegelungssystem (1) nach einem der vorhergehenden Ansprüche, **dadurch gekennzeichnet, dass** ein zweites Übertragungselement (32) mit dem Sperrelement (5) verbunden ist, wobei das zweite Übertragungselement (32) manuell von einer Person betätigbar ist, um das Sperrelement (5) in die Entriegelungsposition zu bewegen.

6. Verriegelungssystem (1) nach einem der vorhergehenden Ansprüche, **dadurch gekennzeichnet, dass** der Verriegelungsantrieb (2) ein selbsthemmendes Schneckengetriebe (16) umfasst.

7. Verriegelungssystem (1) nach Anspruch 1, **dadurch gekennzeichnet, dass** die Bajonett-Verbindung (25) von zwei vom Zentrum (26) des Basiselements (21) aus betrachtet diametral zueinander angeordneten Verriegelungsarmen (27) und dazu korrespondierenden Halteausnehmungen (28) in dem Deckelelement (22), in welche die Verriegelungsarme (27) eingreifen, gebildet ist.

8. Verriegelungssystem (1) nach einem der vorhergehenden Ansprüche, **dadurch gekennzeichnet, dass** auf der Außenseite des Adapterelements (4) ein schlauchförmiges Führungselement (31) angeformt ist, durch welches sich ein Abschnitt des ersten Übertragungselements (9) erstreckt und welches das erste Übertragungselement (9) abschnittsweise führt.

## Claims

1. Locking system (1) for a charging plug of an electrically operated motor vehicle,
having a locking drive (2),
a charging plug receptacle (3) into which the charging plug can be plugged in order to charge the motor vehicle,
an adapter element (4) which is fitted on the outer edge (6) of the charging plug receptacle (3) and is arranged between the charging plug receptacle (3) and the locking drive (2), and
a blocking element (5) which is accommodated in the adapter element (4) and is movable by the locking drive (2) between an unlocking position, in which the blocking element (5) is located outside of an accommodation space (8) in the charging plug receptacle (3) which serves to accommodate the charging plug, and a locking position, in which the blocking element (5) protrudes into accommodation space (8) of the charging plug receptacle (3) and can be brought into engagement with the charging plug,
wherein a first transmission element (9) is arranged between the adapter element (4) and the locking drive (2), and transmits a moving force generated by the locking drive (2) to the blocking element (5) in order to move the blocking element (5) between the unlocking position and the locking position, and which makes it possible for the locking drive (2) and the charging plug receptacle (3) to be arranged at a distance from one another,
wherein the adapter element (4) is designed as a component consisting of at least two parts,
**characterized in that** the adapter element (4) comprises a base element (21) which includes a movement space (23) for the blocking element (5) and a cover element (22) which can be fastened to the base element (21) by means of a bayonet connection (25), wherein the cover element (22) has a compression-expansion space (24), and the cover element (22) which is fastened to the base element (21) and the base element (21) are together fastened to the charging plug receptacle (3) by means of a threaded connection (7), wherein an elastic spring element (12) is provided inside the compression-expansion space (24) in the adapter element (4), which spring element exerts a force on the blocking element (5) which presses the blocking element (5) into the locking position.

2. Locking system (1) according to Claim 1, **characterized in that** the elastic spring element (12) extends between a stop surface (14) of the adapter element (4) and a bracing surface (15) of the blocking element (5) and is supported on each.

3. Locking system (1) according to Claim 1 or 2, **characterized in that** the moving force generated by the locking drive (2) is a force which acts against the force of the elastic spring element (12) in order to move the blocking element (5) out of the locking position and into the unlocking position by means of the first transmission element (9).

4. Locking system (1) according to any one of the preceding claims, **characterized in that** the first transmission element (9) is a Bowden cable (10) which couples the locking drive (2) movably with the blocking element (5) via the adapter element (4).

5. Locking system (1) according to any one of the preceding claims, **characterized in that** a second transmission element (32) is connected to the blocking element (5), wherein the second transmission element (32) is operable manually by a person to move the blocking element (5) into the unlocking position.

6. Locking system (1) according to any one of the preceding claims, **characterized in that** the locking drive (2) comprises a self-inhibiting worm gear (16).

7. Locking system (1) according to Claim 1, **characterized in that** the bayonet connection (25) is formed by two locking arms (27) which are arrange diametrically opposite one another from the perspective of the centre (26) of the base element (21), and retaining recesses (28) corresponding thereto in the cover element (22), in which recesses the locking arms (27) engage.

8. Locking system (1) according to any one of the preceding claims, **characterized in that** a tubular guide element (31) is conformed on the outside of the adapter element (4), through which guide element a portion of the first transmission element (9) extends and which guides a portion of the first transmission element (9).

## Revendications

1. Système de verrouillage (1) pour un connecteur de charge d'un véhicule automobile à entraînement électrique, comportant
un entraînement de verrouillage (2),
un logement de connecteur de charge (3) dans lequel le connecteur de charge peut être connecté pour charger le véhicule automobile,
un élément adaptateur (4) monté sur le bord extérieur (6) du logement de connecteur de charge (3), lequel est disposé entre le logement de connecteur de charge (3) et l'entraînement de verrouillage (2), et
un élément de blocage (5), lequel est incorporé dans l'élément adaptateur (4) et est mobile au moyen de l'entraînement de verrouillage (2) entre une position de déverrouillage, dans laquelle l'élément de blocage (5) est disposé en dehors d'un espace de logement (8) du logement de connecteur de charge (3) servant à loger le connecteur de charge et une position de verrouillage, dans laquelle l'élément de blocage (5) pénètre dans l'espace de logement (8) du logement de connecteur de charge (3) et peut être mis en prise avec le connecteur de charge,
sachant qu'entre l'élément adaptateur (4) et l'entraînement de verrouillage (2) est disposé un premier élément de transmission (9), lequel transmet une force de déplacement générée par l'entraînement de verrouillage (2) à l'élément de blocage (5) pour déplacer l'élément de blocage (5) entre la position de déverrouillage et la position de verrouillage et lequel permet un système espacé de l'entraînement de verrouillage (2) et du logement de connecteur de charge (3), sachant que l'élément adaptateur (4) est constitué comme un composant au moins en deux parties, **caractérisé en ce que** l'élément adaptateur (4) comprend un élément de base (21) comportant un espace de déplacement (23) pour l'élément de blocage (5) et un élément de couverture (22) fixable sur l'élément de base (21) par le biais d'un raccord à baïonnette (25), sachant que l'élément de couverture (22) comporte un espace compression-expansion (24) et l'élément de couverture (22) fixé à l'élément de base (21) et l'élément de base (21) sont fixés en commun par un raccord à vis (7) au logement de connecteur de charge (3), sachant que dans l'élément adaptateur (4), un élément à ressort (12) élastique est prévu à l'intérieur de l'espace compression-expansion (24), lequel exerce une force sur l'élément de blocage (5) repoussant l'élément de blocage (5) dans la position de verrouillage.

2. Système de verrouillage (1) selon la revendication 1, **caractérisé en ce que** l'élément à ressort (12) élastique s'étend entre une surface de butée (14) de l'élément adaptateur (4) et une surface d'appui (15) de l'élément de bocage (5) et s'appuie respectivement sur celles-ci.

3. Système de verrouillage (1) selon la revendication 1 ou 2, **caractérisé en ce que** la force de déplacement générée par l'entraînement de verrouillage (2) est une force agissant à l'opposé de la force de l'élément à ressort (12) élastique pour déplacer l'élément de blocage (5) de la position de verrouillage à la position de déverrouillage au moyen du premier élément de transmission (9).

4. Système de verrouillage (1) selon l'une quelconque des revendications précédentes, **caractérisé en ce que** le premier élément de transmission (9) est un câble Bowden (10), lequel couple en mouvement l'entraînement de verrouillage (2) par l'élément adaptateur (4) à l'élément de blocage (5).

5. Système de verrouillage (1) selon l'une quelconque des revendications précédentes, **caractérisé en ce qu'**un deuxième élément de transmission (32) est relié à l'élément de blocage (5), sachant que le deuxième élément de transmission (32) est actionné manuellement par une personne pour déplacer l'élément de blocage (5) dans la position de déverrouillage.

6. Système de verrouillage (1) selon l'une quelconque des revendications précédentes, **caractérisé en ce que** l'entraînement de verrouillage (2) comprend un engrenage à vis sans fin (16) autobloquant.

7. Système de verrouillage (1) selon la revendication 1, **caractérisé en ce que** le raccord à baïonnette (25) est formé de deux bras de verrouillage (27) disposés diamétralement l'un par rapport à l'autre vus du centre (26) de l'élément de base (21) et d' évidements de retenue (28) correspondants à cet effet dans l'élément de couverture (22) dans lequel viennent en prise les bras de verrouillage (27).

8. Système de verrouillage (1) selon l'une quelconque des revendications précédentes, **caractérisé en ce que** sur la face extérieure de l'élément adaptateur (4) est conformé un élément de guidage (31) de forme tubulaire à travers lequel s'étend une section du premier élément de transmission (9) et lequel guide par sections le premier élément de transmission (9).
